# FASCICULE DE BREVET EUROPEEN

(11) **EP 2 158 557 B1**
(45) Date de publication et mention de la délivrance du brevet: **09.05.2018**
(21) Numéro de dépôt: 07859035.3
(22) Date de dépôt: 06.12.2007
(51) Int. Cl.: G06F 21/55, G06F 21/77

(54) **PROCÉDÉ ET DISPOSITIF DE DÉTECTION DE SAUTS ERRONÉS AU COURS DE L'ÉXECUTION D'UN PROGRAMME**
VERFAHREN UND VORRICHTUNG FÜR DEN NACHWEIS VON FEHLERSPRÜNGEN WÄHREND DER AUSFÜHURUNG EINES PROGRAMMS
METHOD AND DEVICE FOR THE DETECTION OF ERROR JUMPS DURING THE EXECUTION OF A PROGRAM

(30) Priorité: 18.12.2006 FR 0610991
(43) Date de publication de la demande: 03.03.2010
(73) Titulaire: STMICROELECTRONICS SA, 92120 Montrouge (FR)
(72) Inventeur: BANCEL, Frédéric, 13113 Lamanon (FR); BERARD, Nicolas, 13530 Trets (FR); HELY, David, 07130 Toulaud (FR)
(74) Mandataire: Casalonga
(86) Numéro de dépôt international: PCT/IB2007/003903
(87) Numéro de publication internationale: WO 2008/075166

(56) Documents cités:
- EP-A- 1 450 232
- EP-A- 1 507 185
- WO-A-01/22223
- WO-A-2004/023274
- WO-A-2005/008451

## Description

La présente invention concerne la protection des circuits intégrés contre les attaques par injection d'erreur, et notamment la protection des circuits intégrés présents dans les cartes à puce.

La présente invention concerne plus particulièrement un procédé pour sécuriser l'exécution d'un programme par un processeur (microprocesseur ou microcontrôleur) de la puce.

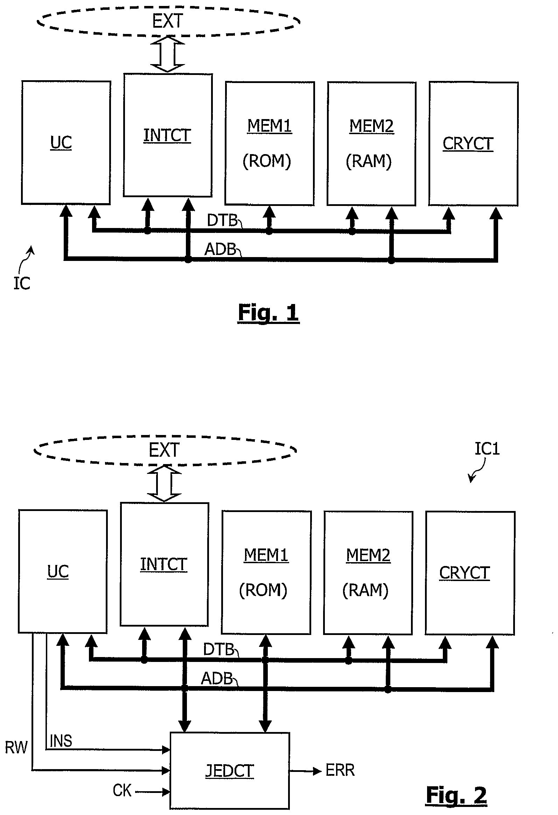

La figure 1 illustre un exemple d'application de l'invention à un circuit intégré IC pour carte à puce ou étiquette électronique. Le circuit intégré IC comprend une unité centrale UC de microprocesseur, une ou plusieurs mémoires non volatiles MEM1 (ROM, EEPROM, FLASH...), une ou plusieurs mémoires volatiles MEM2 (RAM), un circuit de cryptographie CRYCT permettant au circuit intégré de s'authentifier au cours d'une transaction, et un circuit d'interface INTCT lui permettant de communiquer avec des lecteurs de carte à puce ou d'étiquette électronique externes (EXT). Le circuit d'interface INTCT peut être du type à contact et comprendre par exemple des contacts ISO 7816 (contacts d'horloge, de données, d'alimentation, de masse...). Le circuit d'interface INTCT peut aussi être du type sans contact RFID (Radio Frequency Identification) et comprendre une bobine d'antenne RF ou un circuit d'antenne UHF, des circuits de modulation et démodulation de données sortantes et entrantes, un circuit extracteur d'horloge, etc. L'unité centrale UC, les mémoires MEM1, MEM2 et le circuit CRYCT sont reliés entre eux par un bus de données DTB et un bus d'adresse ADB.

Les circuits intégrés sécurisés, comme les circuits intégrés pour cartes à puce, font l'objet de diverses attaques de la part de fraudeurs qui cherchent à découvrir leur structure et/ou les secrets qu'ils comprennent. Il s'agit par exemple de circuits de cryptographie de type DES, AES, RSA..., de microprocesseurs programmés pour exécuter des algorithmes de cryptographie, de banques de registres contenant des clés secrètes, etc.

A l'heure actuelle, les méthodes de piratage les plus avancées consistent à injecter des erreurs dans un circuit intégré lors de l'exécution d'opérations dites sensibles, par exemple des opérations d'authentification ou des opérations d'exécution d'un algorithme de cryptographie.

De telles attaques, appelées attaques par injection d'erreur ou injection de faute, peuvent intervenir pendant des phases de calculs dits sensibles, par exemple pendant des phases de calcul d'un code d'identification ou pendant la lecture d'une clé de cryptographie dans une mémoire. Elles permettent, en combinaison avec des modèles mathématiques et à partir de résultats faux obtenus intentionnellement grâce à des perturbations, de définir un élément secret comme une clé de cryptage ou un mot de passe, de déduire la structure d'un algorithme de cryptographie et/ou les clés secrètes que l'algorithme utilise, etc.

En particulier, les attaques localisées consistent à introduire des perturbations (glitches) en un point déterminé du circuit, par exemple au moyen d'un faisceau laser ou un faisceau de rayon X. Une attaque localisée peut concerner la tension d'alimentation, un chemin de données ou d'adresse, ou le signal d'horloge du circuit intégré.

Ainsi une attaque peut porter sur les données lues dans la mémoire programme (bus DTB), et provoquer une modification d'un code d'instruction transitant sur un bus de donnée. Le code d'instruction modifié peut être interprété comme un saut alors que l'instruction lue n'était pas une instruction de saut, ou comme une autre instruction alors que l'instruction lue était une instruction de saut. Une telle modification peut également provoquer une modification de l'opérande associée à un code d'instruction de saut, c'est-à-dire modifier l'adresse de destination du saut. Le saut ou l'absence de saut ainsi provoqués sont alors définitifs.

L'attaque peut porter également sur l'adresse de lecture de la mémoire programme, elle peut provoquer un saut en l'absence de tout code d'instruction de saut. Si l'attaque porte sur le chemin des adresses de lecture de la mémoire programme (bus ADB), le saut est fugitif et ne concerne qu'une seule adresse lue, puisque le compteur de programme (program counter) de l'unité centrale n'est pas modifié, sauf si le code d'instruction lu est un saut. Si l'attaque entraîne une modification du compteur de programme, le saut est définitif.

Lorsque le saut est définitif, il peut entraîner l'exécution d'une routine de déchargement de données inaccessible en fonctionnement normal, ou un contournement de procédures de vérification.

On connaît du document WO 2005/008451 un procédé de sécurisation de l'exécution d'un programme, consistant à prévoir dans le programme des instructions d'insertion dans une pile de programme d'une valeur de contrôle avant l'exécution d'une séquence d'instructions à protéger, et des instructions de dépilement de ces valeurs après l'exécution de cette séquence d'instructions. La comparaison des valeurs dépilées à des valeurs attendues permet de détecter une anomalie.

On connaît également du document EP 1 507 185 un procédé de protection de l'accès à une routine sensible, consistant à prévoir à une adresse de destination d'une instruction de saut de programme, un contrôle de l'adresse d'origine du saut.

Un objectif de l'invention est de renforcer la protection d'un processeur sécurisé exécutant un programme, en détectant des sauts d'adresse erronés.

Cet objectif est atteint par la prévision d'un procédé d'exécution par une unité centrale, d'un programme lu dans une mémoire programme connectée à l'unité centrale par un bus d'adresse, le procédé comprenant des étapes consistant à :
- détecter, au moyen d'un circuit de détection (JDCT), un saut d'adresse de lecture de la mémoire programme sur le bus d'adresse,
- avant une instruction de saut d'adresse dans le programme, prévoir une instruction de mémorisation dans un premier registre de l'exécution de l'instruction de saut d'adresse, et
- activer, au moyen d'un circuit de détection d'erreur de saut d'adresse (JEDCT), un signal d'erreur si un saut d'adresse a été détecté par le circuit de détection (JDCT) et si le premier registre ne mémorise pas qu'une instruction de saut d'adresse a été exécutée.

Selon un mode de réalisation de l'invention, le procédé comprend une étape de prévision dans la mémoire programme, à une adresse de destination de l'instruction de saut d'adresse, d'une instruction de mémorisation dans un second registre d'un accès à l'adresse de destination.

Selon un mode de réalisation de l'invention, le procédé comprend une étape d'activation du signal d'erreur si le premier registre ne mémorise pas l'exécution de l'instruction de saut d'adresse lorsque le second registre (RGT2) mémorise un accès à l'adresse de destination.

Selon un mode de réalisation de l'invention, le procédé comprend des étapes consistant à :
- activer un compteur à la suite de la mémorisation dans le premier registre de l'exécution de l'instruction de saut d'adresse,
- effacer le premier registre à la suite dans le second registre de la mémorisation de l'accès à l'adresse de destination du saut, et
- activer le signal d'erreur lorsque le compteur arrive en fin de comptage si le premier registre n'a pas été effacé.

Selon un mode de réalisation de l'invention, le procédé comprend des étapes d'effacement du premier registre à chaque cycle de lecture de la mémoire programme tant que le compteur n'est pas actif.

Selon un mode de réalisation de l'invention, le procédé comprend une étape de prévision dans le programme d'une instruction d'effacement de la mémorisation de l'exécution d'une instruction de saut à la suite d'une instruction de saut conditionnel dans la mémoire programme.

Selon un mode de réalisation de l'invention, le procédé comprend des étapes de prévision dans le programme : d'une instruction d'effacement du premier registre à la suite d'une instruction de saut conditionnel, d'instructions de mémorisation dans le premier registre de l'exécution d'instructions de saut avant les instructions de saut conditionnel et inconditionnel, et d'instructions de mémorisation dans le second registre de l'accès aux adresses de destination des sauts inconditionnel et conditionnel.

Selon un mode de réalisation de l'invention, la mémorisation de l'exécution de l'instruction de saut d'adresse est effectuée en chargeant une valeur dans le premier registre, et la mémorisation de l'accès à l'adresse de destination du saut est effectuée en chargeant la même valeur dans le second registre, le signal d'erreur étant activé si les premier et second registres ne mémorisent pas la même valeur à la suite de l'écriture dans le second registre.

Selon un mode de réalisation de l'invention, la valeur chargée dans les premier et second registres est différente pour chaque instruction de saut.

Selon un mode de réalisation de l'invention, la détection de sauts erronés est inhibée durant le déclenchement et à la fin de l'exécution d'une routine d'interruption.

L'invention concerne également un circuit intégré comprenant une mémoire programme et une unité centrale pour exécuter un programme mémorisé dans la mémoire programme, la mémoire programme étant connectée à l'unité centrale par un bus d'adresse, et un dispositif de détection de saut erroné comprenant :
- un circuit de détection connecté au bus d'adresse pour détecter un saut d'adresse de lecture de la mémoire programme,
- un premier registre de mémorisation de l'exécution d'une instruction de saut d'adresse par l'unité de traitement, le premier registre étant accessible en écriture par une instruction exécutable par l'unité de traitement, et
- un circuit de détection d'erreur de saut d'adresse comprenant des moyens pour activer un signal d'erreur si un saut d'adresse a été détecté par le circuit de détection et si le premier registre n'indique pas qu'une instruction de saut d'adresse a été exécutée par l'unité de traitement.

Selon un mode de réalisation de l'invention, le dispositif de détection de saut erroné comprend un second registre de mémorisation d'accès à une adresse de destination d'une instruction de saut d'adresse, le second registre étant accessible en écriture par une instruction exécutable par l'unité de traitement.

Selon un mode de réalisation de l'invention, le circuit de détection d'erreur comprend des moyens pour activer le signal d'erreur si le second registre a été accédé en écriture avant le premier registre.

Selon un mode de réalisation de l'invention, le circuit de détection d'erreur comprend :
- un compteur qui est activé à la suite d'une écriture dans le premier registre,
- des moyens pour effacer le premier registre à la suite d'une écriture dans le second registre, et
- des moyens pour activer le signal d'erreur lorsque le compteur arrive en fin de comptage si le premier registre n'a pas été effacé.

Selon un mode de réalisation de l'invention, le circuit de détection d'erreur comprend des moyens pour effacer le premier registre à chaque cycle de lecture de la mémoire programme tant que le compteur n'est pas actif.

Selon un mode de réalisation de l'invention, le circuit de détection d'erreur comprend des moyens pour comparer le contenu des premier et second registres à la suite de l'écriture dans le second registre, et pour activer le signal d'erreur si les premier et second registres ne mémorisent pas la même valeur.

Selon un mode de réalisation de l'invention, le circuit de détection de saut comprend deux registres chargés avec les deux dernières adresses lues dans la mémoire programme et un comparateur pour déterminer si les adresses mémorisées dans les deux registres sont successives ou non.

Ces objets, caractéristiques et avantages ainsi que d'autres de la présente invention seront exposés plus en détail dans la description suivante d'un mode de réalisation de l'invention, faite à titre non limitatif en relation avec les figures jointes parmi lesquelles :
- la figure 1 décrite précédemment représente sous forme de blocs un circuit intégré,
- la figure 2 représente sous forme de blocs un circuit intégré, équipé d'un dispositif de détection de saut erroné selon un mode de réalisation de l'invention,
- la figure 3 est un circuit électronique d'un mode de réalisation du dispositif de détection de saut erroné.

La figure 2 représente un circuit intégré ICI pour carte à puce ou étiquette électronique. Le circuit intégré ICI comprend une unité centrale UC de microprocesseur, une ou plusieurs mémoires non volatiles MEM1 (ROM, EEPROM, FLASH...), une ou plusieurs mémoires volatiles MEM2 (RAM), un circuit de cryptographie CRYCT permettant au circuit intégré de s'authentifier au cours d'une transaction, et un circuit d'interface INTCT lui permettant de communiquer avec des lecteurs de carte à puce ou d'étiquette électronique externes (EXTRD). Le circuit d'interface INTCT peut être du type à contact et comprendre par exemple des contacts ISO 7816 (contacts d'horloge, de données, d'alimentation, de masse...). Le circuit d'interface INTCT peut aussi être du type sans contact RFID (Radio Frequency Identification) et comprendre une bobine d'antenne RF ou un circuit d'antenne UHF, des circuits de modulation et démodulation de données sortantes et entrantes, un circuit extracteur d'horloge, etc. L'unité centrale UC, les mémoires MEM1, MEM2 et le circuit CRYCT sont reliés entre eux par un bus de données DTB et un bus d'adresse ADB.

Selon un mode de réalisation de l'invention, le circuit intégré ICI comprend un dispositif de détection JPCT configuré pour détecter les sauts erronés pouvant se produire lors de l'exécution d'un programme mémorisé dans la mémoire non volatile MEM1 à la suite d'une attaque par injection d'erreur. Le dispositif JPCT est connecté aux bus d'adresse ADB et au bus de donnée DTB et reçoit du circuit intégré ICI un signal d'horloge CK cadençant la lecture de la mémoire programme. Le dispositif JPCT reçoit de l'unité centrale UC un signal de lecture d'instruction INS indiquant lorsqu'un code d'instruction est en cours de lecture dans la mémoire programme, et un signal RW de sélection d'accès en écriture ou en lecture. Le dispositif JPCT fournit un signal de détection de saut erroné ERR qui est par exemple appliqué à l'unité centrale UC. L'unité centrale peut ainsi prendre toute mesure appropriée à la suite d'un saut de programme erroné.

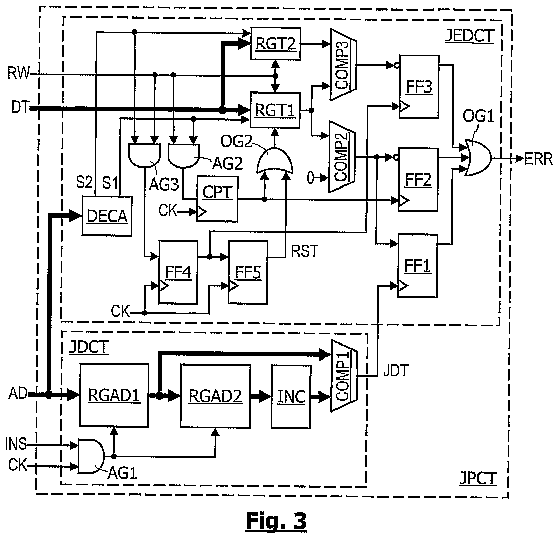

La figure 3 représente un mode de réalisation du dispositif JPCT. Le dispositif JPCT comprend un circuit de détection de saut JDCT dans l'adresse de lecture de la mémoire programme, et un circuit de détection d'erreurs de saut JEDCT.

Le circuit JDCT comprend deux registres d'adresse RGAD1, RGAD2, un circuit d'incrémentation INC, un comparateur COMP1 et une porte logique AG1 de type ET. Le registre RGAD1 est connecté au bus d'adresse ADB du circuit intégré IC1. Le registre RGAD2 est connecté à la sortie du registre RGAD1. La sortie du registre RGAD2 est connectée à l'entrée du circuit INC. Les registres RGAD1 et RGAD2 sont commandés en écriture par le signal de sortie de la porte AG1 recevant en entrée le signal d'horloge CK du circuit ICI et le signal INS de lecture d'un code d'instruction dans la mémoire programme. Ainsi, au début de chaque cycle de lecture de la mémoire programme, le registre RGAD1 est chargé avec l'adresse circulant sur le bus d'adresse ADB, et le registre RGAD2 est chargé avec l'adresse mémorisée dans le registre RGAD1 au cycle de lecture précédent. L'adresse mémorisée dans le registre RGAD2 est incrémentée de un par le circuit INC, puis appliquée à une entrée du comparateur COMP1. L'adresse mémorisée dans le registre RGAD1 est appliquée sur une autre entrée du comparateur COMP1. De cette manière, le comparateur COMP1 fournit un signal JDT indiquant si les deux dernières adresses successives de lecture de la mémoire programme sont ou non consécutives.

Au début de l'exécution d'un programme, à la suite de l'initialisation du circuit JDCT, les deux registres RGAD1 et RGAD2 mémorisent une valeur initiale qui ne correspond pas à la première adresse de lecture de la mémoire programme MEM1. Il est donc préférable d'inhiber le circuit pendant les deux cycles de lecture nécessaires au chargement du registre RGAD2 avec la première adresse de lecture de la mémoire programme MEM1.

Le circuit JEDCT comprend un décodeur d'adresse DECA connecté au bus d'adresse, et deux registres RGT1, RGT2 connectés au bus de donnée DTB du circuit intégré IC1, et recevant un signal de commande d'écriture RW du circuit intégré IC1. Le décodeur d'adresse DECA fournit deux signaux S1, S2 de sélection permettant d'accéder à l'un ou l'autre des registres RGT1, RGT2 en fonction de l'adresse transmise par le bus ADB. Ainsi, l'unité centrale UC peut adresser l'un ou l'autre des deux registre RGT1, RGT2 pour y écrire une donnée transmise par le bus DTB.

Le circuit JEDCT comprend deux comparateurs COMP2, COMP3. Le comparateur COMP2 compare à 0 le contenu du registre RGT1, et le comparateur COMP3 compare entre eux le contenu des deux registres RGT1 et RGT2.

Le circuit JEDCT comprend un compteur CPT cadencé par le signal d'horloge CK et une porte logique AG2 de type ET recevant le signal RW et le signal S1. La sortie de la porte AG2 est connectée à une entrée d'activation du compteur CPT. Ainsi, le compteur CPT est activé lorsque le registre RGT1 est sélectionné en écriture.

Le circuit JEDCT comprend une porte logique AG3 de type ET, deux bascules FF4, FF5 cadencées par le signal d'horloge CK, et une porte logique OG2 de type OU dont une entrée est connectée à la sortie du compteur CPT. La porte AG3 reçoit le signal RW et le signal S2 de sélection du registre RGT2. La sortie de la porte AG3 est connectée à l'entrée de la bascule FF4. La bascule FF4 change donc d'état lorsque le registre RGT2 est sélectionné en écriture. La sortie de la bascule FF4 est connectée à l'entrée de la bascule FF5. La sortie de la bascule FF5 fournit un signal RST qui est envoyé à l'entrée de la porte OG2. La sortie de la porte OG2 commande l'initialisation du registre RGT1.

Le circuit JEDCT comprend trois bascules FF1, FF2, FF3. L'entrée de signal d'horloge de la bascule FF1 reçoit le signal de détection de saut JDT en sortie du comparateur COMP1. La bascule FF1 comprend une entrée connectée à la sortie du comparateur COMP2. L'entrée de signal d'horloge de la bascule FF2 est connectée à la sortie du compteur CPT. La bascule FF2 comprend une entrée inversée connectée à la sortie du comparateur COMP2. L'entrée de signal d'horloge de la bascule FF3 est connectée à la sortie de la bascule FF4. La bascule FF3 comprend une entrée inversée connectée à la sortie du comparateur COMP3. Chacune des sorties des bascules FF1, FF2, FF3 est connectée à une entrée d'une porte logique OG1 de type OU. La sortie de la porte OG1 fournit le signal de détection de saut erroné ERR.

Le registre RGT1 est initialisé à chaque cycle du signal d'horloge CK lorsque le compteur est à 0. Le registre RGT2 est à 0 à l'initialisation du dispositif JPCT. Une écriture dans le registre RGT2 déclenche automatiquement le comparateur COMP3. Après un cycle d'horloge, la bascule FF4 déclenche la bascule FF3. Si les deux registres RGT1 et RGT2 ne mémorisent pas la même valeur, la bascule FF3 fait passer à 1 le signal d'erreur ERR. Après le cycle d'horloge suivant, le signal RST en sortie de la bascule FF5 passe à 1, ce qui déclenche l'initialisation du registre RGT1.

A chaque écriture dans le registre RGT1, le compteur CPT est déclenché pour un comptage de quelques cycles du signal d'horloge CK. A la fin du comptage, le compteur initialise le registre RGT1 et déclenche la bascule FF2.

Si le saut est déclenché par l'exécution d'une instruction de saut, le registre RGT1 a été préalablement chargé à une valeur non nulle. Si le saut n'est pas effectué à une adresse prévue dans le programme, le registre RGT2 reste à 0. Il en résulte que le comparateur COMP3 n'est pas déclenché avant que le compteur CPT atteigne la valeur 0. Lorsque le compteur CPT passe à 0, la bascule FF2 est déclenchée. Si la valeur du registre RGT1 est non nulle, le signal de sortie de la bascule FF2 et donc le signal d'erreur ERR passe à 1.

La mise en oeuvre du dispositif JPCT implique la prévision de séquences d'instructions de chargement des registres RGT1, RGT2 avant et après un saut.

Les séquences d'instructions suivantes, données à titre d'exemple, sont prévues pour chaque instruction qui produit un saut inconditionnel (instruction de saut inconditionnel, d'appel de sous-programme ou de retour de sous-programme) :

```
             . . . . . .
             LD A,VAL1 / Chargement de VAL1
             LD RGT1,A / dans le registre RGT1
             JP LABEL1 / Saut à l'adresse LABEL1
             . . . . . .
     LABEL1 LD A,VAL1 / A l'adresse LABEL1,
             LD RGT2,A / chargement de VAL1 dans
             . . . . . . / le registre RGT2
```

Dans les séquences d'instructions ci-dessus, chaque instruction qui produit un saut inconditionnel est précédée d'instructions de chargement d'une valeur VAL1 non nulle dans le registre RGT1. A l'adresse LABEL1 atteinte par le saut (ou au début du sous-programme appelé, ou après une instruction d'appel du sous-programme), sont prévues des instructions de chargement de la même valeur VAL1 dans le registre RGT2.

Si un saut d'adresse de lecture de la mémoire programme est détecté par le circuit JDCT, le signal JDT est à 1. Si le registre RGT1 est à 0, cela signifie que le saut détecté n'est pas déclenché par l'exécution d'une instruction de saut. Le comparateur COMP2 fournit alors un signal à 1 à l'entrée de la bascule FF1 qui fait passer à 1 le signal d'erreur ERR.

Le chargement de la valeur VAL1 dans le registre RGT1 par le programme déclenche le compteur CPT et donc l'arrêt de l'initialisation du registre RGT1. Si à l'exécution du saut, l'adresse de lecture de la mémoire programme passe à l'adresse du saut LABEL1, le circuit JDCT détecte le saut. La bascule FF1 est alors déclenchée, mais ne fait pas passer le signal d'erreur à 1 puisque le registre RGT1 n'est pas à 0. En parallèle, le programme à l'adresse LABEL1 charge la valeur VAL1 dans le registre RGT2, ce qui déclenche la comparaison des deux registres RGT1 et RGT2 par le comparateur COMP3. Après un cycle du signal CK, la bascule FF3 recopie le signal de sortie du comparateur COMP3. Si les contenus des deux registres RGT1 et RGT2 sont identiques, le saut d'adresse dans la mémoire programme est bien déclenché par le programme et a bien été effectué à la bonne adresse LABEL1. Le signal ERR reste donc à 0. Si le saut est effectué à une autre adresse, deux cas peuvent se présenter selon que l'adresse de destination du saut est ou non une adresse prévue de destination d'un saut.

Si le saut atteint une adresse ne correspondant pas à une adresse de destination d'un saut, le registre RGT2 n'est pas accédé en écriture et le comparateur COMP3 n'est pas déclenché avant que le compteur CPT atteigne la fin du comptage. A la fin du comptage, le compteur CPT atteint la valeur 0. La bascule FF2 est alors déclenchée. Si le registre RGT1 est à une valeur non nulle (indiquant la présence d'une instruction de saut), le signal en sortie de la bascule FF2 et donc le signal d'erreur ERR passe à 1. La fin du comptage déclenche également l'initialisation du registre RGT1.

Si le saut atteint une adresse de destination d'un autre saut prévu dans le programme, le registre RGT2 est accédé en écriture, ce qui déclenche la comparaison des registres RGT1 et RGT2. Le saut erroné ne sera pas détecté si les registres RGT1 et RGT2 sont toujours chargés avec la même valeur VAL1. Par contre, si pour chaque saut prévu dans le programme, on charge des valeurs différentes dans les registres RGT1 et RGT2, la comparaison des registres RGT1 et RGT2 effectuée par le comparateur COMP3 fera apparaître une différence si le saut est effectué à une adresse de saut erronée.

Les séquences d'instructions qui suivent, données à titre d'exemple, sont prévues pour chaque saut conditionnel du programme.

```
             . . . . . .
             LD A,VAL1 / Chargement de VAL1
             LD RGT1,A / dans le registre RGT1
             CP X,#$DD / instruction de comparaison
             JREQ LABEL1 / saut conditionnel selon le
                           / résultat de la comparaison
                           / à l'adresse LABEL1
             CLR RGT1 / effacement registre RGT1
             . . . . . .
      LABEL1 LD A,VAL1 / A l'adresse LABEL1,
             LD RGT2,A / chargement de VAL1 dans
              . . . . . . / le registre RGT2
```

Chaque instruction qui produit un saut conditionnel est précédée d'instructions de chargement d'une valeur VAL1 non nulle dans le registre RGT1. L'instruction suivant le saut conditionnel est suivie d'une instruction de mise à 0 du registre RGT1 (exécutée dans le cas où la condition de saut n'est pas réalisée). A l'adresse atteinte par le saut conditionnel LABEL1, sont prévues des instructions de chargement de la même valeur VAL1 dans le registre RGT2.

Si le saut n'est pas effectué, le registre RGT1 est initialisé. Par conséquent, lorsque le compteur CPT arrive en fin de comptage, le comparateur COMP2 détecte que le registre RGT1 est à 0 et ne déclenche pas la montée à 1 du signal ERR.

Cette solution n'est pas totalement fiable, car si l'adresse de saut est faussée et correspond à l'adresse courante (de l'instruction de saut) incrémentée de 1, le registre RGT1 est effacé, et l'erreur de saut ne sera pas détectée. Pour éviter cet inconvénient, il suffit de dupliquer les séquences d'instructions de test et de saut conditionnel avec une instruction mise à 0 du registre RGT1 entre les deux séquences.

Il est à noter que le chargement d'une valeur différente de 0 dans le registre RGT1, alors que celui-ci n'est pas à 0 n'est pas autorisé. En effet, il faut attendre que le compteur CPT ait terminé son comptage pour ne pas risquer de masquer des sauts erronés. Le temps de comptage du compteur CPT est donc de préférence choisi au plus court afin d'éviter d'avoir à insérer des instructions d'attente entre deux instructions de saut proches. Ainsi, la durée du compteur CPT peut être choisie égale à la durée maximum de l'exécution d'un saut (instruction de saut, d'appel de sous-programme ou de retour de sous-programme) à laquelle ont été ajoutées la durée de chargement du registre RGT2 (1 cycle du signal CK) et la durée de changement d'état des deux bascules FF4 et FF5 (deux cycles du signal CK).

Le temps de comptage du compteur CPT doit également être choisi au plus court pour pouvoir détecter des sauts erronés qui seraient effectués quelques instructions avant l'adresse de destination d'une instruction de saut.

En dehors des périodes où le compteur CPT est actif (en cours de comptage), le compteur est à 0 et la sortie de celui-ci est à 1. Le registre RGT1 est donc initialisé à chaque cycle du signal CK. On évite ainsi que son contenu soit modifié durablement par une perturbation.

A la suite du passage à l'état actif du signal d'erreur ERR, toute mesure appropriée peut être prise, comme l'effacement de données sensibles dans l'une des mémoires MEM1. Si le signal ERR est appliqué à l'unité de traitement UC, une réinitialisation de l'unité de traitement, voire la mise hors service définitive du circuit intégré ICI peut être prévue. Toute autre mesure d'urgence connue de l'homme de l'art peut être prise lorsque le signal d'erreur ERR passe à l'état actif.

Il est à noter que si les instructions de chargement du registre RGT2 sont exécutées en l'absence de saut (registre RGT1 à 0), une erreur de saut est générée (signal ERR à 1) du fait que l'écriture dans le registre RGT2 déclenche la comparaison du contenu des deux registres par le comparateur COMP3 et la bascule FF3. Pour éviter cet inconvénient, il suffit de charger préalablement la valeur du registre RGT2 dans le registre RGT1 ou prévoir une instruction de saut pour ne pas exécuter ces instructions.

Dans un souci de simplicité, divers signaux dont la prévision est à la portée de l'homme de l'art n'ont pas été décrits dans ce qui précède, seuls les signaux nécessaires à la compréhension de l'invention ayant été décrits. Ainsi, si les signaux permettant d'initialiser les registres et les bascules du dispositif JPCT n'ont pas été décrits, il va de soi que de tels signaux d'initialisation doivent être prévus.

Si le déroulement du programme exécuté par l'unité centrale UC peut être interrompu par un signal d'interruption déclenchant l'exécution d'une routine d'interruption, l'unité de traitement ne doit pas tenir compte du signal d'erreur ERR au moins au lancement et à la fin de l'exécution d'une routine d'interruption. En effet, le lancement de l'exécution d'une routine d'interruption provoque un saut d'adresse qui peut apparaître n'importe quand durant l'exécution du programme. Il n'est donc pas possible de charger les registres RGT1 et RGT2 avant et après les sauts résultant de l'exécution d'une routine d'interruption.

Alternativement, on peut prévoir des moyens d'inhibition du dispositif JPCT pour qu'il ne génère pas d'erreur. L'inhibition du dispositif JPCT peut être effectuée en masquant le signal d'erreur ERR en sortie du dispositif JPCT, par exemple à l'aide d'une porte logique de type ET recevant le signal d'erreur et un signal d'inhibition. L'inhibition du dispositif peut également être effectuée en forçant à 0 le signal INS au moins au lancement et à la fin de l'exécution de la routine d'interruption. Ainsi le dispositif JPCT ou le circuit JDCT peuvent être inhibés à la suite du saut vers la routine d'interruption, uniquement durant deux cycles de lecture de la mémoire programme, nécessaires au chargement du registre RGAD2 avec la première adresse de la routine d'interruption. Pour la même raison, le dispositif JPCT ou le circuit JDCT devrait également être inhibé durant deux cycles de lecture de la mémoire programme après la fin de l'exécution de la routine d'interruption.

Il apparaîtra clairement à l'homme de l'art que la présente invention est susceptible de diverses variantes de réalisation et d'applications. En particulier, l'invention n'est pas limitée à un dispositif de détection d'erreur de saut vérifiant que chaque saut effectué lors de l'exécution d'une instruction de saut par le circuit intégré soit effectué à l'adresse spécifiée dans l'opérande associée à l'instruction de saut. En effet, l'invention peut être réduite à vérifier que chaque saut détecté résulte de l'exécution d'une instruction de saut. Dans ce cas, seuls le circuit de détection de saut JDCT, le registre RGT1, le comparateur COMP2 et la bascule FF1 sont nécessaires. La prévision de ces composants permet simplement de rendre plus systématique la détection d'erreurs de saut.

Par ailleurs, il n'est pas nécessaire de prévoir des registres à plusieurs bits pour mémoriser qu'une instruction de saut va être exécutée ou pour mémoriser que l'adresse de destination du saut a été accédée. En effet, la mémorisation de ces deux événements peut être simplement effectuée en levant un drapeau, c'est-à-dire en changeant l'état d'une bascule. La prévision de registres de plusieurs bits donnant la possibilité de mémoriser des valeurs différentes permet d'affiner la détection d'erreurs de saut. En effet, en établissant une liaison entre l'instruction de saut et son adresse de destination de saut, il est possible de vérifier qu'un saut n'est pas effectué à une adresse de destination d'un autre saut.

L'invention est bien entendu applicable à tout processeur (microprocesseur ou microcontrôleur) et pas uniquement à des circuits intégrés de cartes à puce.

## Revendications

1. Procédé d'exécution dans un circuit intégré par une unité centrale (UC), d'un programme lu dans une mémoire programme (MEM1) connectée à l'unité centrale par un bus d'adresse (ADB), le procédé comprenant des étapes consistant à :
- détecter, au moyen d'un circuit de détection (JDCT), un saut d'adresse de lecture de la mémoire programme sur le bus d'adresse,
- avant une instruction de saut d'adresse dans le programme, prévoir une instruction de mémorisation dans un premier registre (RGT1) de l'exécution de l'instruction de saut d'adresse, et
- activer, au moyen d'un circuit de détection d'erreur de saut d'adresse (JEDCT), un signal d'erreur (ERR) si un saut d'adresse a été détecté par le circuit de détection (JDCT) et si le premier registre ne mémorise pas qu'une instruction de saut d'adresse a été exécutée.

2. Procédé selon la revendication 1, comprenant une étape de prévision dans le programme, à une adresse de destination de l'instruction de saut d'adresse, d'une instruction de mémorisation dans un second registre (RGT2) d'un accès à l'adresse de destination.

3. Procédé selon la revendication 2, comprenant une étape d'activation du signal d'erreur (ERR) si le premier registre (RGT1) ne mémorise pas l'exécution de l'instruction de saut d'adresse lorsque le second registre (RGT2) mémorise un accès à l'adresse de destination.

4. Procédé selon la revendication 2 ou 3, comprenant des étapes consistant à :
- activer un compteur (CPT) à la suite de la mémorisation dans le premier registre (RGT1) de l'exécution de l'instruction de saut d'adresse,
- effacer le premier registre à la suite de la mémorisation dans le second registre (RGT2) de l'accès à l'adresse de destination du saut, et
- activer le signal d'erreur (ERR) lorsque le compteur arrive en fin de comptage si le premier registre n'a pas été effacé.

5. Procédé selon la revendication 4, comprenant des étapes d'effacement du premier registre (RGT1) à chaque cycle de lecture de la mémoire programme (MEM1) tant que le compteur (CPT) n'est pas actif.

6. Procédé selon l'une des revendications 1 à 5, comprenant une étape de prévision dans le programme d'une instruction d'effacement du premier registre (RGT1) à la suite d'une instruction de saut conditionnel.

7. Procédé selon l'une des revendications 1 à 5, comprenant des étapes de prévision dans le programme :
d'une instruction d'effacement du premier registre (RGT1) à la suite d'une instruction de saut conditionnel,
d'instructions de mémorisation dans le premier registre de l'exécution d'instructions de saut avant les instructions de saut conditionnel et inconditionnel, et
d'instructions de mémorisation dans le second registre (RGT2) de l'accès aux adresses de destination des sauts inconditionnel et conditionnel.

8. Procédé selon l'une des revendications 2 à 7, dans lequel la mémorisation de l'exécution de l'instruction de saut d'adresse est effectuée en chargeant une valeur (VAL1) dans le premier registre (RGT1), et la mémorisation de l'accès à l'adresse de destination du saut est effectuée en chargeant la même valeur dans le second registre (RGT2), le signal d'erreur (ERR) étant activé si les premier et second registres ne mémorisent pas la même valeur à la suite de l'écriture dans le second registre.

9. Procédé selon la revendication 8, dans lequel la valeur (VAL1, VAL2) chargée dans les premier et second registres (RGT1, RGT2) est différente pour chaque instruction de saut.

10. Procédé selon l'une des revendications 1 à 9, dans lequel la détection de sauts erronés est inhibée durant le déclenchement et à la fin de l'exécution d'une routine d'interruption.

11. Circuit intégré comprenant une mémoire programme (MEM1) et une unité centrale (UC) pour exécuter un programme mémorisé dans la mémoire programme, la mémoire programme (MEM1) étant connectée à l'unité centrale par un bus d'adresse (ADB), et un dispositif de détection de saut erroné (JPCT) comprenant :
- un circuit de détection (JDCT) connecté au bus d'adresse pour détecter un saut d'adresse de lecture de la mémoire programme,
- un premier registre (RGT1) de mémorisation de l'exécution d'une instruction de saut d'adresse par l'unité de traitement (UC), le premier registre étant accessible en écriture par une instruction exécutable par l'unité de traitement, et
- un circuit de détection d'erreur de saut d'adresse (JEDCT) comprenant des moyens (COMP2, FF1) pour activer un signal d'erreur (ERR) si un saut d'adresse a été détecté par le circuit de détection et si le premier registre n'indique pas qu'une instruction de saut d'adresse a été exécutée par l'unité de traitement.

12. Circuit intégré selon la revendication 11, dans lequel le dispositif de détection de saut erroné (JPCT) comprend un second registre (RGT2) de mémorisation d'accès à une adresse de destination d'une instruction de saut d'adresse, le second registre étant accessible en écriture par une instruction exécutable par l'unité de traitement (UC).

13. Circuit intégré selon la revendication 12, dans lequel le circuit de détection d'erreur (JEDCT) comprend des moyens (COMP3, FF3) pour activer le signal d'erreur (ERR) si le second registre (RGT2) a été accédé en écriture avant le premier registre (RGT1).

14. Circuit intégré selon l'une des revendications 12 et 13, dans lequel le circuit de détection d'erreur (JEDCT) comprend :
- un compteur (CPT) qui est activé à la suite d'une écriture dans le premier registre (RGT1),
- des moyens (AG3, FF4, FF5) pour effacer le premier registre (RGT1) à la suite d'une écriture dans le second registre (RGT2), et
- des moyens (CMP2, FF2) pour activer le signal d'erreur (ERR) lorsque le compteur arrive en fin de comptage si le premier registre n'a pas été effacé.

15. Circuit intégré selon la revendication 14, dans lequel le circuit de détection d'erreur (JEDCT) comprend des moyens pour effacer le premier registre (RGT1) à chaque cycle de lecture de la mémoire programme (MEM1) tant que le compteur (CPT) n'est pas actif.

16. Circuit intégré selon l'une des revendications 12 à 15, dans lequel le circuit de détection d'erreur (JEDCT) comprend des moyens (COMP3, FF3) pour comparer le contenu des premier et second registres (RGT1, RGT2) à la suite de l'écriture dans le second registre (RGT2), et pour activer le signal d'erreur (ERR) si les premier et second registres ne mémorisent pas la même valeur (VAL1, VAL2).

17. Circuit intégré selon l'une des revendications 11 à 16, dans lequel le circuit de détection de saut (JDCT) comprend deux registres (RGAD1, RGAD2) chargés avec les deux dernières adresses lues dans la mémoire programme (MEM1) et un comparateur (INC, COMP1) pour déterminer si les adresses mémorisées dans les deux registres sont successives ou non.

## Patentansprüche

1. Verfahren zur Ausführung in einer integrierten Schaltung durch eine Zentraleinheit (UC) eines Programms, das in einem Programmspeicher (MEM1) gelesen wird, der über einen Adressbus (ADB) mit der Zentraleinheit verbunden ist,
wobei das Verfahren Schritte aufweist, die darin bestehen:
- einen Leseadressensprungs des Programmspeichers auf dem Adressbus mittels einer Erkennungsschaltung (JDCT) zu erkennen,
- vor einem Adressensprungbefehl in dem Programm einen Speicherbefehl in einem ersten Register (RGT1) der Ausführung des Adressensprungbefehls vorzusehen und
- mittels einer Fehlererkennungsschaltung eines Adressensprungs (JEDCT) ein Fehlersignal (ERR) zu aktivieren, wenn ein Adressensprung von der Erkennungsschaltung (JDCT) erkannt worden ist und wenn das erste Register nicht aufzeichnet, dass ein Adressensprungbefehl ausgeführt worden ist.

2. Verfahren nach Anspruch 1, umfassend einen Schritt des Vorhersehens in dem Programm an einer Zieladresse des Adressensprungbefehls eines Speicherbefehls in einem zweiten Register (RGT2) eines Zugriffs auf die Zieladresse.

3. Verfahren nach Anspruch 2, umfassend einen Schritt des Aktivierens des Fehlersignals (ERR), wenn das erste Register (RGT1) die Ausführung des Adressensprungbefehls nicht speichert, wenn das zweite Register (RGT2) einen Zugriff auf die Zieladresse speichert.

4. Verfahren nach Anspruch 2 oder 3, umfassend Schritte, die darin bestehen:
- im Anschluss an das Speichern in dem ersten Register (RGT1) der Ausführung des Adressensprungbefehls einen Zähler (CPT) zu aktivieren,
- im Anschluss an das Speichern in dem zweiten Register (RGT2) des Zugriffs auf die Zieladresse des Sprungs das erste Register zu löschen und
- das Fehlersignal (ERR) zu aktivieren, wenn der Zähler das Ende der Zählung erreicht, wenn das erste Register nicht gelöscht worden ist.

5. Verfahren nach Anspruch 4, umfassend Schritte des Löschens des ersten Registers (RGT1) bei jedem Lesezyklus des Programmspeichers (MEM1), solange der Zähler (CPT) nicht aktiv ist.

6. Verfahren nach einem der Ansprüche 1 bis 5, umfassend einen Schritt des Vorhersehens in dem Programm eines Löschbefehls des ersten Registers (RGT1) im Anschluss an einen bedingten Sprungbefehl.

7. Verfahren nach einem der Ansprüche 1 bis 5, umfassend Schritte des Vorhersehens in dem Programm:
eines Löschbefehls des ersten Registers (RGT1) im Anschluss an einen bedingten Sprungbefehl,
von Speicherbefehlen in dem ersten Register der Ausführung von Sprungbefehlen vor dem bedingten und dem unbedingten Sprungbefehl und
von Speicherbefehlen in dem zweiten Register (RGT2) des Zugriffs auf Zieladressen von dem unbedingten und dem bedingten Sprung.

8. Verfahren nach einem der Ansprüche 2 bis 7, wobei das Speichern der Ausführung des Adressensprungbefehls durchgeführt wird, indem ein Wert (VAL1) in das erste Register (RGT1) geladen wird und das Speichern des Zugriffs auf die Zieladresse des Sprungs durchgeführt wird, indem der gleiche Wert in das zweite Register (RGT2) geladen wird, wobei das Fehlersignal (ERR) aktiviert wird, wenn das erste und das zweite Register im Anschluss an das Schreiben in das zweite Register nicht den gleichen Wert speichern.

9. Verfahren nach Anspruch 8, wobei der Wert (VAL1, VAL2), der in das erste und zweite Register (RGT1, RGT2) geladen wird, für jeden Sprungbefehl verschieden ist.

10. Verfahren nach einem der Ansprüche 1 bis 9, wobei das Erkennen von falschen Sprüngen bei dem Auslösen und am Ende des Ausführens einer Unterbrechungsroutine inhibiert wird.

11. Integrierte Schaltung, umfassend einen Programmspeicher (MEM1) und eine Zentraleinheit (UC), um ein Programm auszuführen, das in dem Programmspeicher gespeichert ist, wobei der Programmspeicher (MEM1) durch einen Adressbus (ADB) mit der Zentraleinheit verbunden ist, und eine Vorrichtung zum Erkennen von einem falschen Sprung (JPCT), umfassend:
- eine Erkennungsschaltung (JDCT), die mit dem Adressbus verbunden ist, um einen Leseadressensprung des Programmspeichers zu erkennen,
- ein erstes Register (RGT1) zum Speichern der Ausführung eines Adressensprungbefehls durch die Verarbeitungseinheit (UC), wobei das erste Register (RGT1) durch einen Befehl beschreibbar ist, der durch die Verarbeitungseinheit ausführbar ist, und
- eine Fehlererkennungsschaltung eines Adressensprungs (JEDCT), umfassend Mittel (COMP2, FF1), um ein Fehlersignal (ERR) zu aktivieren, wenn ein Adressensprung von der Erkennungsschaltung erkannt worden ist und wenn das erste Register nicht angibt, dass ein Adressensprungbefehl von der Verarbeitungseinheit ausgeführt worden ist.

12. Integrierte Schaltung nach Anspruch 11, wobei die Vorrichtung zum Erkennen von einem falschen Sprung (JPCT) ein zweites Register (RGT2) zum Speichern eines Zugriffs auf eine Zieladresse eines Adressensprungbefehls aufweist, wobei das zweite Register durch einen Befehl beschreibbar ist, der durch die Verarbeitungseinheit (UC) ausführbar ist.

13. Integrierte Schaltung nach Anspruch 12, wobei die Fehlererkennungsschaltung (JEDCT) Mittel (COMP3, FF3) aufweist, um das Fehlersignal (ERR) zu aktivieren, wenn das zweite Register (RGT2) vor dem ersten Register (RGT1) beschrieben worden ist.

14. Integrierte Schaltung nach einem der Ansprüche 12 und 13 wobei die Fehlererkennungsschaltung (JEDCT) aufweist:
- einen Zähler (CPT), der im Anschluss an ein Schreiben in das erste Register (RGT1) aktiviert wird,
- Mittel (AG3, FF4, FFS), um das erste Register (RGT1) im Anschluss an ein Schreiben in das zweite Register (RGT2) zu löschen, und
- Mittel (CMP2, FF2), um das Fehlersignal (ERR) zu aktivieren, wenn der Zähler das Ende der Zählung erreicht, wenn das erste Register nicht gelöscht worden ist.

15. Integrierte Schaltung nach Anspruch 14, wobei die Fehlererkennungsschaltung (JEDCT) Mittel aufweist, um das erste Register (RGT1) bei jedem Lesezyklus des Programmspeichers (MEM1) zu löschen, solange der Zähler (CPT) nicht aktiv ist.

16. Integrierte Schaltung nach einem der Ansprüche 12 bis 15, wobei die Fehlererkennungsschaltung (JEDCT) Mittel (COMP3, FF3) aufweist, um den Inhalt des ersten und zweiten Registers (RGT1, RGT2) im Anschluss an das Schreiben in das zweite Register (RGT2) zu vergleichen und um das Fehlersignal (ERR) zu aktivieren, wenn das erste und zweite Register (RGT2) nicht den gleichen Wert (VAL1, VAL2) speichern.

17. Integrierte Schaltung nach einem der Ansprüche 11 bis 16, wobei die Sprungerkennungsschaltung (JDCT) zwei Register (RGAD1, RGAD2), die mit den zwei letzten Adressen geladen sind, die in dem Programmspeicher (MEM1) gelesen sind, und einen Komparator (INC, COMP1) aufweist, um zu bestimmen, ob die Adressen, die in den zwei Registern gespeichert sind, aufeinanderfolgend sind oder nicht.

## Claims

1. Method for the execution, in an integrated circuit, by a central unit (UC), of a program read in a program memory (MEM1) connected to the central unit via an address bus (ADB), the method comprising steps consisting in:
- detecting, by way of a detection circuit (JDCT), a read address jump in the program memory on the address bus,
- before an address jump instruction in the program, providing an instruction to store, in a first register (RGT1), the execution of the address jump instruction, and
- activating, by way of an address jump error detection circuit (JEDCT), an error signal (ERR) if an address jump has been detected by the detection circuit (JDCT) and if the first register does not store the fact that an address jump instruction has been executed.

2. Method according to Claim 1, comprising a step of providing, in the program, to a destination address of the address jump instruction, an instruction to store an accessing of the destination address in a second register (RGT2).

3. Method according to Claim 2, comprising a step of activating the error signal (ERR) if the first register (RGT1) does not store the execution of the address jump instruction when the second register (RGT2) stores an accessing of the destination address.

4. Method according to Claim 2 or 3, comprising steps consisting in:
- activating a counter (CPT) following the storage, in the first register (RGT1), of the execution of the address jump instruction,
- clearing the first register following the storage, in the second register (RGT2), of the accessing of the jump destination address, and
- activating the error signal (ERR) when the counter finishes counting if the first register has not been cleared.

5. Method according to Claim 4, comprising steps of clearing the first register (RGT1) upon each cycle of reading the program memory (MEM1) as long as the counter (CPT) is not active.

6. Method according to one of Claims 1 to 5, comprising a step of providing, in the program, an instruction to clear the first register (RGT1) following a conditional jump instruction.

7. Method according to one of Claims 1 to 5, comprising steps of providing, in the program:
an instruction to clear the first register (RGT1) following a conditional jump instruction,
instructions to store, in the first register, the execution of jump instructions before the conditional and unconditional jump instructions, and
instructions to store, in the second register (RGT2), the accessing of the destination addresses of the unconditional and conditional jumps.

8. Method according to one of Claims 2 to 7, wherein the execution of the address jump instruction is stored by loading a value (VAL1) in the first register (RGT1), and the accessing of the jump destination address is stored by loading the same value in the second register (RGT2), the error signal (ERR) being activated if the first and second registers do not store the same value following the write to the second register.

9. Method according to Claim 8, wherein the value (VAL1, VAL2) loaded in the first and second registers (RGT1, RGT2) is different for each jump instruction.

10. Method according to one of Claims 1 to 9, wherein the detection of erroneous jumps is prevented during the triggering and at the end of the execution of an interrupt routine.

11. Integrated circuit comprising a program memory (MEM1) and a central unit (UC) for executing a program stored in the program memory, the program memory (MEM1) being connected to the central unit via an address bus (ADB), and an erroneous jump detection device (JPCT) comprising:
- a detection circuit (JDCT), connected to the address bus, for detecting a read address jump in the program memory,
- a first register (RGT1) for storing the execution of an address jump instruction by the processing unit (UC), the first register being write-accessible through an instruction able to be executed by the processing unit, and
- an address jump error detection circuit (JEDCT) comprising means (COMP2, FF1) for activating an error signal (ERR) if an address jump has been detected by the detection circuit and if the first register does not indicate that an address jump instruction has been executed by the processing unit.

12. Integrated circuit according to Claim 11, wherein the erroneous jump detection device (JPCT) comprises a second register (RGT2) for storing accessing of a destination address of an address jump instruction, the second register being write-accessible through an instruction able to be executed by the processing unit (UC) .

13. Integrated circuit according to Claim 12, wherein the error detection circuit (JEDCT) comprises means (COMP3, FF3) for activating the error signal (ERR) if the second register (RGT2) has been write-accessed before the first register (RGT1).

14. Integrated circuit according to either of Claims 12 and 13, wherein the error detection circuit (JEDCT) comprises:
- a counter (CPT) that is activated following a write to the first register (RGT1),
- means (AG3, FF4, FF5) for clearing the first register (RGT1) following a write to the second register (RGT2), and
- means (CMP2, FF2) for activating the error signal (ERR) when the counter finishes counting if the first register has not been cleared.

15. Integrated circuit according to Claim 14, wherein the error detection circuit (JEDCT) comprises means for clearing the first register (RGT1) upon each cycle of reading the program memory (MEM1) as long as the counter (CPT) is not active.

16. Integrated circuit according to one of Claims 12 to 15, wherein the error detection circuit (JEDCT) comprises means (COMP3, FF3) for comparing the content of the first and second registers (RGT1, RGT2) following the write to the second register (RGT2), and for activating the error signal (ERR) if the first and second registers do not store the same value (VAL1, VAL2) .

17. Integrated circuit according to one of Claims 11 to 16, wherein the jump detection circuit (JDCT) comprises two registers (RGAD1, RGAD2) loaded with the last two addresses read in the program memory (MEM1) and a comparator (INC, COMP1) for determining whether or not the addresses stored in the two registers are successive.
